# EUROPEAN PATENT SPECIFICATION

(11) **EP 0 526 711 B1**
(45) Date of publication and mention of the grant of the patent: **02.11.1995**
(21) Application number: 92109698.8
(22) Date of filing: 09.06.1992
(51) Int. Cl.: B07C 5/02, B65G 11/06

(54) **A slide conveyor**
Gleitförderer
Convoyeur de glissement

(30) Priority: 07.08.1991 US 741665
(43) Date of publication of application: 10.02.1993
(73) Proprietor: ESM INTERNATIONAL, INC., Houston Texas 77036 (US)
(72) Inventor: Long, William Coleman, Houston, Texas 77074 (US)
(74) Representative: Frankland, Nigel Howard

(56) References cited:
- GB-A- 2 134 818
- US-A- 3 870 143
- US-A- 4 339 027
- US-A- 4 367 817
- US-A- 4 469 229

## Description

**THE PRESENT INVENTION** pertains to a slide conveyor such as may be used for conveying small fungible products for optical sorting, and more specifically for singulating (i.e. separating into individual items) such products as broad beans, almonds and the like that often do not singulate or separate from each other when conveyed in conventional fashion.

Small fungible products are conventionally inspected and sorted by optical viewing means by being conveyed down an appropriate chute or slide past an optical viewing station. Conventional sorting machine electronics operate on the principle that one product at a time passes the viewing station even though a stream of such products occurs so fast that the naked eye cannot separate one conveyed product from another. A prior art slide conveyor for conveying such items as coffee beans or other such products, both agricultural and non-agricultural, such as that disclosed in US-A-4624368 has a U-shaped cross section with a relatively large bottom radius. The sides of the slide slope inwardly toward each other at an acute angle, but at an included angle that is sufficiently great for the bottom of the slide conveyor to have a rounded U-shaped bottom with a radius that is larger than the largest radius of the products being conveyed. A bean, for example, is generally spherical, but is shaped to have a long axis and a short axis, the short axis generally subtending an arc that has a smaller radius than the arc generally subtended by the long axis. The U-shaped bottom of a conventional conveyor has a radius that is larger than even the products' large radius.

The conventional conveyor is positioned at an angle to a level floor in excess of 45 degrees. The entrance to the slide conveyor is conventionally fed by a hopper-and-vibratory feeder that dumps a relatively large quantity of products onto the slide at one time. As the products slide or roll down the conveyor, they gradually unstack themselves so that by the time they pass by the viewing station of the sorter, the products are no longer overlapping each other. This permits the electronics of the machine to consider each viewed object on its own merits. Thus, if a viewed product is too short, too long, has too large a dark spot, or too large a light spot or is too light or too dark overall, the reject mechanism for separating the "substandard" or "nonstandard" product, usually an air jet, is only actuated to remove the nonstandard product and not others. By contrast, a slide conveyor that does not adequately singulate or separate in the fashion just described can produce a bunching of products that will be detected as too long for a single product and, therefore, cause a rejection that never should have occurred at all. This bunching of products can also "hide" defects from the optics, and cause the machine to accept a "bad" product.

It should be noted that a conventional slide conveyor of the type just described does not particularly orient generally spherical shaped products as they emerge or pass from the exit of the slide. That is, if the products tend to be a little longer in one dimension than another, some will slide off or roll off one way and others will slide off or roll off oriented differently. There is no uniform or consistent orientation of the products even though they are singulated. In many applications, this does not make any difference, but in some applications where the products are more disc shaped than spherical shaped, it very well may be important to optical viewing.

It should also be noted that products which are more disc-shaped than spherical shaped, and which may or may not have a pointed end, do not consistently singulate in the type of slide conveyor just described. For example, broad beans are substantially disc shaped, somewhat like a miniature discus wherein the sides are slightly convex although the product is referred to loosely as being flat. The edges have a small radius, actually much smaller than a generally spherical product of the type discussed above. Almonds are also somewhat disc shaped in the same manner as broad beans, however, almonds also have a pointed end. When broad beans, almonds, or similar "flat" sided, disc-like products are conveyed down a slide conveyor of the conventional type previously described, sometimes two or three of such products will wedge together in the U-shaped bottom. At other times, one such product will straddle the bottom angle and skid along the sides either individually or with other like products. When either of these randomly occurring events happens, then the slide conveyor does not function to singulate the products and the products exiting the slide will often be bunched together. As described above, bunched products can result in erroneous rejection or sorting of individually standard-sized products. Moreover, products that exit after straddling the bottom can be viewed as substandard in width compared with "flat" products that are oriented to be approximately in a plane bisecting the bottom angle of the slide.

The present invention therefore seeks to provide an improved slide conveyor for sorting machines that dependably singulates and orients products that are more disc-like than spherical.

According to one aspect of this invention there provides a slide conveyor for separating and orienting products to be viewed in an optical sorting machine, the conveyor comprising an elongate, generally U-sectioned component having a longitudinal axis designed to be disposed at an angle to the horizontal so that the conveyor conveys products by gravity action from an upper region to a lower region of the conveyor, characterised in that the generally U-sectioned component is twisted about its longitudinal axis over its length, such that the open mouth of the U-section points in different directions at opposite ends of the conveyor.

Preferably the generally U-sectioned component is twisted over its length through an angle within the range 75 degrees to 90 degrees.

Conveniently the generally U-sectioned component is twisted through an angle of approximately 85 degrees over its length.

Advantageously the conveyor is designed for conveying substantially disc-shaped products having convex sides, the generally U-sectioned component being formed with a base or bottom having a radius which is less than the radius of the convex sides of the disc-shaped products but which is larger than the radius of the edge between the convex sides of the products.

Preferably the base or bottom of the generally U-sectioned component is designed to receive the substantially disc-shaped products on edge only.

The conveyor may be designed for singulating and orienting small, approximately flat fungible products.

Preferably the generally U-sectioned component comprises a narrow U-shaped bottom for accepting the products on edge and not crosswise, an upper section for receiving the products oriented so that a line bisecting said U-shaped bottom in said upper section is substantially vertical so as to at least approximately vertically orient the flat sides of the products as they pass through said upper section, a lower section of the conveyor oriented so that the flat sides of the products are oriented at least approximately normal to vertical for flat side optical viewing as they emerge from said lower section, and an intermediate section of the conveyor gradually curvingly joining said upper section to said lower section.

This invention additionally provides a slide conveyor as described above, the conveyor having a U-shaped bottom designed to accept the products on edge but not crosswise, the upper region of the conveyor being oriented such that a line bisecting the U-shaped bottom in the upper region is substantially vertical so that the generally flat sides of the fungible products stand substantially vertically, characterised in that the lower region of the conveyor is oriented such that the generally flat sides of the fungible products lie approximately normal to the vertical.

In another aspect this invention provides an optical sorting machine incorporating a slide conveyor in any of the forms described above.

This invention further provides a method of separating and orienting generally flat fungible products prior to viewing the products in an optical sorting machine, the method comprising the step of conveying the products to the optical sorting machine along a slide conveyor in any of the forms described above.

In order that the present invention may be more readily understood and so that further features thereof may be appreciated the invention will now be described by way of example, with reference to the accompanying drawings, in which:
FIGURE 1 is a schematic diagram of a sorting machine utilizing a slide conveyor for presenting small fungible products or articles in singulating fashion before an optical viewing station;
FIGURE 2 is an isometric view of a slide conveyor in accordance with the prior art;
FIGURE 3 is a graphical representation of how the slide conveyor shown in Figure 2 singulates generally spherically shaped products;
FIGURES 3A, 3B and 3C are cross-sectional views of the slide conveyor shown in Figure 3 at three locations "A-A", "B-B" and "C-C" along its length,
FIGURE 4 is a graphical representation of how the slide conveyor shown in Figure 2 would handle flat, disc-shaped products in a manner that would not guarantee singulation;
FIGURES 4A, 4B and 4C are cross-sectional views of the slide conveyor shown in Figure 4 at three locations "A-A", "B-B", "C-C" along its length;
FIGURE 5 is an isometric view of a slide conveyor in accordance with the present invention;
FIGURE 6 is a graphical representation of how the slide conveyor shown in Figure 5 singulates and orients flat, disc-shaped products; and
FIGURES 6A, 6B and 6C are cross-sectional views of the slide conveyor shown in Figure 6 at three locations "A-A", "B-B" and "C-C" along its length.

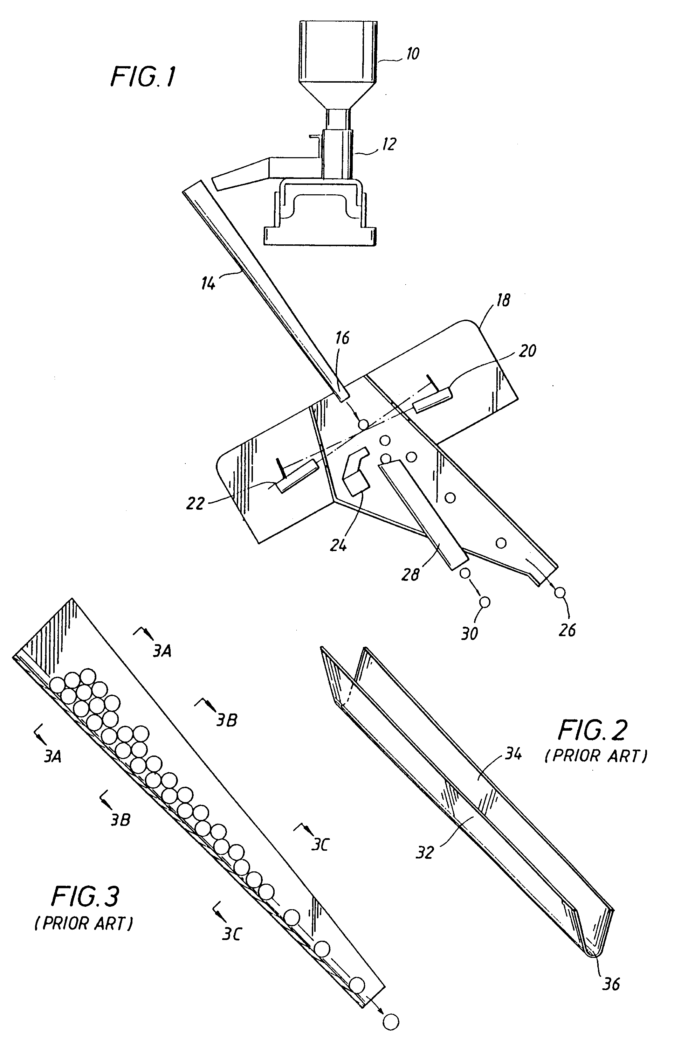

Referring now to the drawings and first to Figure 1, a diagram is shown of the basic components of an optical/electronic sorting machine with which a slide conveyor is employed for presenting singulated spherical products to an optical viewing station. Suitable products that have been singulated and sorted with such equipment have included coffee beans, peanuts and like generally spherically-shaped products. The sorting process involves placing a large mass or quantity of such products in a hopper 10. The products are then dispensed by gravity action through the bottom of the hopper to a vibratory feeder 12, which shakes the products onto the entrance or top end of a slide conveyor 14.

The products slide and roll down the slide conveyor separating themselves from each other in a manner described hereinafter so as to emerge in singulated fashion from the exit or lower end 16 of conveyor 14 and so as to present the product stream to an optical viewing station 18. The products are viewed by one or more optical viewers 20, 22. In Figure 1 the viewer 20 is a front viewer and the viewer 22 is a rear viewer.

When a nonstandard or substandard product is detected, in the product stream passing through the optical viewing station, the electronics therein activate a reject mechanism, normally an air ejector, to blow or otherwise remove the nonstandard product from the stream. This produces a rejected product stream 26 which is shown deflected to the right at the bottom of Figure 1. The products that are not rejected pass along a slide conveyor extension 28 to eventually exit or emerge in a product stream 30.

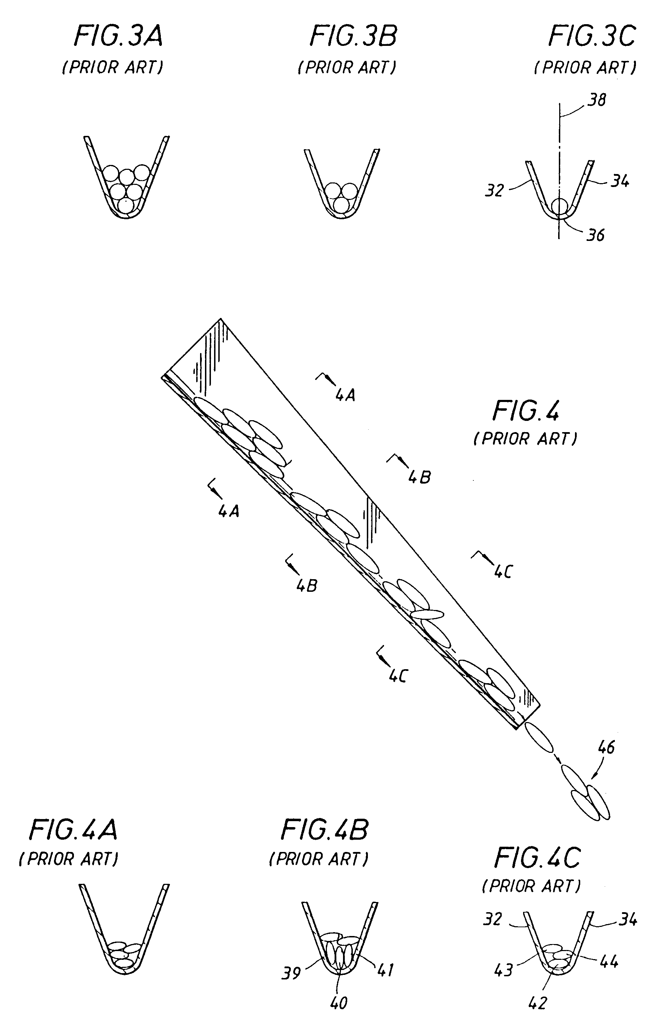

The system just described has many variations, such as multiple parallel slide conveyors being included on the same machine, stacked slide conveyors being located so that each accepted product has to pass through two optical viewing and sorting actions, and reverse reject/accept action where the rejected products are not deflected and the accepted products are. However, these alternatives and other alternatives all utilize at least one slide conveyor for singulating the products. A prior art slide conveyor used for this purpose is shown in isometric view in Figure 2 and is shown acting on generally spherical products in Figures 3, 3A, 3B and 3C.

Basically, the prior art slide conveyor is a one-piece channel having opposite sides 32 and 34 that join or converge together at a U-shaped bottom 36. A centre line 38 bisecting the slide conveyor bottom angle is vertical, as shown, for example, in Figure 3C. The angle of convergence, as best shown in Figures 3A, 3B and 3C is an acute angle which results in the bottom of the conveyor having a larger radius than even the largest radius of the spherical products. The height of the sides 32, 34 at the top of the slide conveyor is typically larger than at the exit, as shown in Figure 3, since the products are initially bunched together in this upper section portion of the slide conveyor. Products may, in effect, be stacked several products deep in this initial or entrance area. As the products progress down the conveyor, they roll and slide and bump up against one another. The products in greatest surface contact with the conveyor progress the slowest such that, provided the conveyor is long enough, they are singulated by the time that the stream of products emerge from the end of the conveyor. There is no opportunity for spherical products to wedge or lock in place vis-a-vis one or more other products, as can be seen from Figures 3A, 3B and 3C which show a progression of the mass of products as the stream moves down the conveyor.

What is perfectly satisfactory for spherical products, however, is not satisfactory for singulating such products as broad beans, almonds and the like. These products are generally disc-like in shape and have two "flat" sides and a relatively thin edge. Actually, the sides are slightly convex and in the case of almonds, one edge comes to a point. In any case, there is a long axis from edge to edge, a short axis from side to side and a smaller edge radius than with spherical products of the same mass.

Figures 4, 4A, 4B and 4C illustrate the conditions that exist on a prior art slide conveyor of the type shown in Figures 2 and 3 when such disc-shaped products are conveyed. First, very little rolling of the products is possible. Instead, the products tend to slide. In some cases the products will become aligned approximately parallel to the sides or walls of the conveyor, as shown for products 39, 40 and 41 in the bottom group of products shown in Figure 4B. In some cases, the products bridge from side to side across the bottom of the U-shaped channel, such as shown for product 42 in Figure 4C. Sometimes, two further such products will lie on a bridging product, such as in the case of products 43 and 44 shown in Figure 4C. In all such cases, there is not the relative friction and rolling actions that caused separation or singulation of spherical products, as shown in Figures 3, 3A, 3B and 3C. Thus, the products often exit or emerge at the lower end of the slide conveyor in overlapping bunches, such as shown for bunch 46 in Figure 4.

Optical viewing electronics operate in various operating modes; however, generally, the viewing for nonstandard products is for spots of unacceptable size and colour and/or products that are outside of a predefined dimension range. When products emerge before the optical viewing station in bunched form, spots are often hidden from view. Also, detecting the ends of the bunch will indicate a "product" that is too long since the end-to-end dimension of such a bunch is often longer than for a single standard product. Thus, the conveyor shown in Figure 4 is not acceptable for singulating disc-like products.

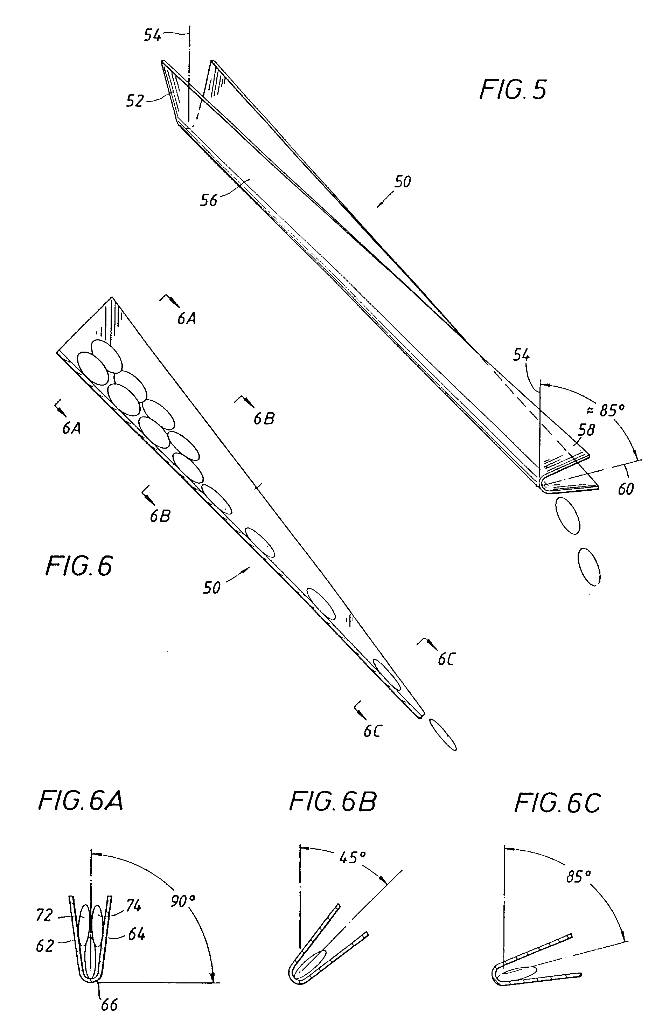

Now referring to Figure 5, a slide conveyor 50 in accordance with the present invention is shown. The conveyor is much like that of Figure 4 in that it is generally in the form of a channel having opposed sides 62, 64 which converge to form a U-shaped base or bottom 66; however, in this case, the slide conveyor 50 is gently or gradually twisted about a longitudinal axis passing through the base of the conveyor channel between its top or upper entrance end and its exit or emergence end. The conveyor is twisted through an angle of approximately 85 degrees. The overall slope of the conveyor remains the same as for the conveyor of Figures 2 and 3, normally over 45 degrees and usually about 75 degrees. Although normally formed as one piece, the conveyor can be thought of as being three sequential pieces or sections. Thus the conveyor 50 may be regarded as having an upper section or end 52, an intermediate section 56 and a lower section or end 58. The upper end 52 is aligned with a vertical centre line 54 which bisects its bottom angle (i.e. the angle defined in the base of the conveyor channel); in the intermediate section 56 this centre line gradually rotates or rolls to one side (in this case, to the right when viewed from the lower end); the lower section 58 has a corresponding centre line 60 at about an 85 degree rotation from the original position of the centre line 54 at the top of the conveyor. Thus, the centre line 60 is about 5 degrees above horizontal or being level with the floor. Although this amount of rotation is preferred, a range from 75-90 degrees is acceptable.

Now referring to Figures 6, 6A, 6B and 6C the action of such a conveyor as shown in Figure 5 is illustrated with respect to a stream of disc-like products. It should also be noted that in addition to being twisted, the conveyor sides 62 and 64 join or converge at the U-shaped bottom 66 at more of an acute angle than did the sides 32 and 34 of the conveyor shown in Figure 3C. The radius of the U-shaped bottom 66 is much less than the radius of the convex "flat" side of the disc-like products to be conveyed, but is slightly larger than the smallest or edge radius of the products.

As shown in Figure 6A, it is very possible for three products to bunch up at the entrance at the upper end of the conveyor 50, one product 70 being on edge in the U-shaped bottom 66 and products 72 and 74 being between product 70 and a respective wall or side 62, 64 of the conveyor. In such a case, the sides 62 and 64 present more surface to the sides of products 72 and 74 than the bottom 66 presents to the edge of product 70. Thus, there is uneven friction on the products that causes them to slide at slightly different rates to begin with.

In the intermediate section 56 the products are rotated due to the twisting of the conveyor itself, as shown in Figure 6B. This causes the weight distribution of the products to become uneven, wedging tighter some products and loosening others. Thus, the products slide unevenly to cause further separation. This process continues in the lower section 58, resulting in even more separation. At all times up until at least the end of the lower section 58, the bottom centre line 60 is angled slightly above horizontal to prevent the products from dropping out of the slide conveyor.

When the products emerge or exit from the bottom section of the conveyor, the products are all aligned and present their broad or "flat" (in practice slightly convex) sides to the optical viewer. This is an advantage since the electronics can operate in the knowledge or assumption that the disc-like products will not be presented in the viewing station on edge. Pointed edges or ends, such as occur with almonds, will also be presented either directed down or up, that is to say directed parallel with the elongate axis of the conveyor. Thus, in all cases, the products are singulated. In all cases, the products are oriented so that their broad sides are normal to a line to the optical viewing instrument located directly on line with the centre line of the lower section of the conveyor. In the cases of slightly pointed products, these products are additionally oriented with their points along the axis of the conveyor.

Thus, in summary, the channel-like slide conveyor in accordance with the current invention can be considered as comprising three parts, namely, an upper section, a lower section, and an intermediate section. The bottom of the channel has a U-shaped cross section that has a radius that is much less than the radius of the convex flat side, but slightly larger than the radius of the edge of the disc-shaped products that are sorted. The upper section of the conveyor that receives the mass products, usually from a hopper/vibrator input means, is aligned in the normal way, that is, with a line bisecting the angle of the U-shaped bottom being vertical. As the products slide down this upper section, they tend to more or less turn on edge so that they approximately line up on edge parallel with or in the same plane as the bisecting line. The intermediate section of the slide curves or turns slowly so that the products are still held by gravity against the bottom, but the bottom or the line bisecting the bottom has rotated through an angle of about 45 degrees with respect to the top section. Finally, the bottom section causes the emergence of the products to the optical viewing station so that the broad sides of the products are presented for optical viewing. This means that the line of the viewing element is approximately normal or perpendicular to the approximate plane of the large sides of the products.

The gentle twist or turning or curving of the slide from the upper section to the intermediate section and to the lower section is sufficiently gentle or gradual that there is no sharp delineation from one section to the next. Products that did not completely separate themselves from each other in the upper section can be shown to accomplish such separation during the course of travelling through the intermediate and lower sections so that as they emerge they are singulated and their large, "flat" sides are consistently presented for viewing. In the event of conveying products that are pointed, the points are generally oriented to be axially parallel with the U-shaped bottom at the time of exit or emergence from the lower section.

It will be appreciated that the preferred embodiment of the present invention provides an improved slide conveyor for sorting machines that dependably presents the "flat" side of disc-like products for optical view sorting, regardless of whether or not the products also have a pointed end.

In addition the preferred embodiment of the present invention provides an improved slide conveyor for sorting machines of the type described without resorting to auxiliary moving parts.

The features disclosed in the foregoing description, in the following claims and/or in the accompanying drawings may, both separately and in any combination thereof, be material for realising the invention in diverse forms thereof. For example, the intermediate section of the slide can be twisted to the left, rather than to the right, if desired.

## Claims

1. A slide conveyor for separating and orienting products to be viewed in an optical sorting machine, the conveyor comprising an elongate, generally U-sectioned component (50) having a longitudinal axis designed to be disposed at an angle to the horizontal so that the conveyor conveys products by gravity action from an upper region (52) to a lower region (58) of the conveyor, characterised in that the generally U-sectioned component (50) is twisted about its longitudinal axis over its length, such that the open mouth of the U-section points in different directions at opposite ends of the conveyor.

2. A slide conveyor according to Claim 1 wherein the generally U-sectioned component (50) is twisted over its length through an angle within the range 75 degrees to 90 degrees.

3. A slide conveyor according to Claim 2 wherein the generally U-sectioned component (50) is twisted through an angle of approximately 85 degrees over its length.

4. A slide conveyor according to any of the Claims 1 to 3 wherein the conveyor is designed for conveying substantially disc-shaped products having convex sides, the generally U-sectioned component (50) being formed with a base or bottom (66) having a radius which is less than the radius of the convex sides of the disc-shaped products but which is larger than the radius of the edge between the convex sides of the products.

5. A slide conveyor according to Claim 4 wherein the base or bottom (66) of the generally U-sectioned component (50) is designed to receive the substantially disc-shaped products on edge only.

6. A slide conveyor according to any one of Claims 1 to 3 wherein the conveyor is designed for singulating and orienting small, approximately flat fungible products.

7. A slide conveyor(50) according to Claim 6 wherein the generally U-sectioned component(50) comprises a narrow U-shaped bottom(66) for accepting the products on edge and not crosswide, an upper section(52) for receiving the products oriented so that a line(54) bisecting said U-shaped bottom(66) in said upper section(52) is substantially vertical so as to at least approximately vertically orient the flat sides of the products as they pass through said upper section(52), a lower section(58) of the conveyor(50) oriented at least approximately normal to vertical for flat side optical viewing as they emerge from said lower section(58), and an intermediate section(56) of the conveyor(50) gradually curvingly joining said upper section(52) to said lower section(58).

8. A slide conveyor according to Claim 6, the conveyor having a U-shaped bottom(66) designed to accept the products on edge but not crosswise, the upper region(52) of the conveyor being oriented such that a line(54) bisecting the U-shaped bottom(66) in the upper region(52) of the conveyor being oriented such that a line(54) bisecting the U-shaped bottom(66) in the upper region(52) is substantially vertical so that the generally flat sides of the fungible products stand substantially vertically, characterised in that the lower region(58) of the conveyor is oriented such that the generally flat sides of the fungible products lie approximately normal to the vertical.

9. An optical sorting machine incorporating a slide conveyor in accordance with any one of Claims 1 to 8.

10. A method of separating and orienting generally flat fungible products prior to viewing the products in an optical sorting machine, the method comprising the step of conveying the products to the optical sorting machine along a slide conveyor in accordance with any one of Claims 1 to 8.

## Patentansprüche

1. Gleitförderer zum Trennen und Ausrichten von Produkten, die in einer optischen Sortiermaschine gesichtet werden sollen, wobei der Förderer eine längliche, im allgemeinen einen U-förmigen Querschnitt habende Komponente (50) umfaßt, die eine Längsachse aufweist, die so ausgestaltet ist, daß sie mit einem Winkel zu der Horizontalen angeordnet ist, damit der Förderer Produkte mittels der Schwerkraft von einem oberen Bereich (52) zu einem unteren Bereich (58) des Förderers befordert, dadurch gekennzeichnet, daß die im allgemeinen einen U-förmigen Querschnitt habende Komponente (50) über ihre Länge um ihre Längsachse gedreht ist, so daß die Mundöffnung des U-Querschnittes an sich gegenüberliegenden Enden des Förderers in unterschiedliche Richtungen zeigt.

2. Gleitförderer nach Anspruch 1, dadurch gekennzeichnet, daß die im allgemeinen einen U-förmigen Querschnitt habende Komponente (50) über ihre Länge um einen Winkel in dem Bereich von 75 Grad bis 90 Grad gedreht ist.

3. Gleitförderer nach Anspruch 2, dadurch gekennzeichnet, daß die im allgemeinen einen U-förmigen Querschnitt habende Komponente (50) um einen Winkel von ungefähr 85 Grad über ihre Länge gedreht ist.

4. Gleitförderer nach einem der Ansprüche 1 bis 3, dadurch gekennzeichnet, daß der Förderer zum Fordern von im wesentlichen scheibenförmigen Produkten mit konvexen Seiten konstruiert ist, wobei die im allgemeinen einen U-förmigen Querschnitt habende Komponente (50) mit einem Boden oder Unterteil (66) ausgebildet ist, dessen Radius kleiner als der Radius der konvexen Seiten der scheibenförmigen Produkte aber größer als der Radius der Kante zwischen den konvexen Seiten der Produkte ist.

5. Gleitförderer nach Anspruch 4, dadurch gekennzeichnet, daß der Boden oder das Unterteil (66) der im allgemeinen einen U-förmigen Querschnitt habenden Komponente (50) zum nur hochkantigen Aufnehmen der im wesentlichen scheibenförmigen Produkte ausgebildet ist.

6. Gleitförderer (50) nach irgendeinem der Ansprüche 1 bis 3, dadurch gekennzeichnet, daß der Förderer zum Trennen und Ausrichten von kleinen, ungefähr flachen, gleichartigen Produkten ausgebildet ist.

7. Gleitförderer nach Anspruch 6, dadurch gekennzeichnet, daß die im allgemeinen einen U-förmigen Querschnitt habende Komponente einen U-förmigen Boden (66) zum hochkantigen und nicht queren Aufnehmen der Produkte, einen oberen Bereich (52) zum Empfangen der Produkte, die so orientiert sind, daß eine Linie (54), die besagten U-förmigen Boden (66) in besagtem oberen Bereich (52) halbiert, im wesentlichen vertikal ist, um zumindest ungefähr vertikal die flachen Seiten der Produkte zu orientieren, während diese durch besagten oberen Bereich (52) hindurchtreten, einen unteren Bereich (58) des Förderers, der so orientiert ist, daß die flachen Seiten der Produkte zumindest ungefähr senkrecht zur Vertikalen orientiert sind, für die optische Sichtung der flachen Seiten, wenn sie aus besagtem unteren Bereich (58) austreten, und einen mittleren Bereich (56) des Förderers umfaßt, der sich kontinuierlich drehend besagten oberen Bereich (52) mit besagtem unteren Bereich (58) verbindet.

8. Gleitförderer nach Anspruch 6, bei dem der einen U-förmigen Boden (66) habende Förderer so ausgestaltet ist, daß er die Produkte hochkantig, aber nicht quer, aufnimmt, wobei der obere Bereich (52) des Förderers so orientiert ist, daß eine Linie (54), die besagten U-förmigen Boden (66) halbiert in dem oberen Bereich (52), im wesentlichen vertikal verläuft, so daß die im allgemeinen flachen Seiten der gleichartigen Produkte im wesentlichen vertikal stehen, dadurch gekennzeichnet, daß der untere Bereich (58) des Förderers so orientiert ist, daß die im allgemeinen flachen Seiten der gleichartigen Produkte im wesentlichen senkrecht zu der Vertikalen liegen.

9. Optische Sortiermaschine, die einen Gleitförderer nach irgendeinem der Ansprüche 1 bis 8 beinhaltet.

10. Verfahren zum Trennen und Ausrichten von im allgemeinen flachen, gleichartigen Produkten vor dem Sichten der Produkte in einer optischen Sortiermaschine, wobei das Verfahren den Schritt des Förderns der Produkte zu der optischen Sortiermaschine entlang eines Gleitförderers nach irgendeinem der Ansprüche 1 bis 8 umfaßt.

## Revendications

1. Un convoyeur de glissement pour séparer et orienter des produits à visualiser dans une machine de triage optique, le convoyeur comprenant un élément allongé (50), à section générale en U, ayant un axe longitudinal propre à être disposé avec un angle par rapport à l'horizontale de sorte que le convoyeur convoit des produits sous l'effet de la gravité depuis une zone supérieure (52) vers une zone inférieure (58) du convoyeur, caractérisé en ce que l'élément à section générale en U (50) est vrillé autour de son axe longitudinal sur sa longueur, tel que l'embouchure ouverte de la section en U pointe suivant des directions différentes à des extrémités opposées du convoyeur.

2. Un convoyeur de glissement conforme à la revendication 1 dans lequel l'élément à section générale en U (50) est vrillé sur sa longueur d'un angle compris dans l'intervalle de 75 degrés à 90 degrés.

3. Un convoyeur de glissement conforme à la revendication 2 dans lequel l'élément à section générale en U (50) est vrillé d'un angle d'approximativement 85 degrés sur sa longueur.

4. Un convoyeur de glissement conforme à l'une quelconque des revendications précédentes dans lequel le convoyeur est propre à convoyer des produits sensiblement discoïdes ayant des côtés convexes, l'élément à section générale en U (50) étant formé avec une base ou un fond (66) ayant un rayon qui est inférieur au rayon des côtés convexes des produits discoïdes mais qui est supérieur au rayon du bord entre les côtés convexes des produits.

5. Un convoyeur de glissement conforme à la revendication 4 dans lequel la base ou le fond (66) de l'élément à section générale en U (50) est propre à recevoir les produits sensiblement discoïdes seulement par leur bord.

6. Un convoyeur de glissement conforme à l'une quelconque des revendications 1 à 3 dans lequel le convoyeur est propre à singulariser et orienter des produits fongibles approximativement plats, petits.

7. Un convoyeur de glissement (50) conforme à la revendication 6 dans lequel l'élément à section générale en U (50) comprend un fond étroit en forme de U (66) pour accueillir les produits par leur bord et non en travers, une section supérieure (52) pour recevoir les produits orientés de sorte qu'une ligne (54) bissectrice dudit fond en forme de U (66) dans ladite section supérieure (52) soit sensiblement verticale de manière à orienter au moins approximativement verticalement les côtés plats des produits lorsqu'ils passent à travers ladite section supérieure (52), une section inférieure (58) du convoyeur (50) orientée au moins approximativement perpendiculairement à la verticale pour visualiser optiquement des côtés plats lorsqu'ils sortent de ladite section inférieure (58), et une section intermédiaire (56) du convoyeur (50) joignant graduellement d'une manière curviligne ladite section supérieure (52) à ladite section inférieure (58).

8. Un convoyeur de glissement conforme à la revendication 6, le convoyeur ayant un fond étroit en forme de U (66) propre à accueillir les produits par leur bord mais non en travers, la zone supérieure (52) du convoyeur étant orientée de sorte qu'une ligne (54) bissectrice du fond en forme de U (66) dans la zone supérieure (52) du convoyeur soit orientée telle qu'une ligne (54) bissectrice du fond en U (66) dans la zone supérieure (52) soit sensiblement verticale de sorte que les côtés généralement plats des produits fongibles se dressent sensiblement verticalement, caractérisé en ce que la zone inférieure (58) du convoyeur est orientée telle que les côtés généralement plats des produits fongibles soient approximativement perpendiculaires à la verticale.

9. Une machine de triage optique incorporant un convoyeur de glissement conforme à l'une quelconque des revendications 1 à 8.

10. Un procédé de séparation et d'orientation de produits fongibles généralement plats avant de visualiser les produits dans une machine de triage optique, le procédé comprenant l'étape de convoyer les produits vers la machine de triage optique le long d'un convoyeur de glissement conforme à l'une quelconque des revendications 1 à 8.
